# EUROPÄISCHE PATENTSCHRIFT

(11) **EP 1 239 728 B1**
(45) Veröffentlichungstag und Bekanntmachung des Hinweises auf die Patenterteilung: **09.07.2003**
(21) Anmeldenummer: 00987398.5
(22) Anmeldetag: 14.12.2000
(51) Int. Cl.: A01N 31/02

(54) **HEPATITIS A VIRUZID**
HEPATITIS A VIRICIDE
VIROCIDE CONTRE L'HEPATITE A

(30) Priorität: 23.12.1999 DE 19962353
(43) Veröffentlichungstag der Anmeldung: 18.09.2002
(73) Patentinhaber: Ecolab Inc., St. Paul, MN 55102-1390 (US)
(72) Erfinder: VON RHEINBABEN, Friedrich, 40789 Monheim (DE); BIERING, Holger, 41516 Grevenbroich (DE); BANSEMIR, Klaus-Peter, 40764 Langenfeld (DE); GLAESER, Sabine, 40593 Düsseldorf (DE)
(74) Vertreter: Kluschanzoff, Harald
(86) Internationale Anmeldenummer: EP0012688
(87) Internationale Veröffentlichungsnummer: WO01047358

(56) Entgegenhaltungen:
- EP-A- 0 692 192
- EP-A- 0 848 907
- DE-A- 3 725 381
- DE-A- 19 713 850
- US-A- 4 849 455
- US-A- 5 043 357

## Beschreibung

Die vorliegende Erfindung betrifft die Verwendung von Mitteln, die gegen Hepatitis A Viruzid wirken und gar keine chlorhaltigen und/oder -abspaltenden Wirkstoffe enthalten.

Händedesinfektionsmittel besitzen im allgemeinen nur eine sehr eingeschränkte Wirksamkeit gegenüber Viren. In der Regel werden nur die sogenannten behüllten und/oder lipophilen Viren erreicht. Hierzu zählen Hepatitis B-Virus, HIV und Rotavirus. Viele weitere, insbesondere aber die sogenannten unbehüllten hydrophilen Viren, werden dagegen durch die üblichen Händedesinfektionsmittel nicht erreicht. Übliche Händedesinfektionsmittel sind vielfach auf der Basis von Alkoholen mit einem Gesamt-Alkoholgehalt von rund 70 % konzipiert und gelten gegenüber den sogenannten unbehüllten hydrophilen Viren als wirkungslos. Das Hepatitis A-virus, das wohl wichtigste unbehüllte hydrophile Virus im humanmedizinischen und im Lebensmittel-Bereich ist hier eingeschlossen. Rund 5000 bis 6000 Hepatitis A Fälle werden pro Jahr allein für die Bundesrepublik gemeldet. Diese repräsentieren aber nur ca. 5 % der tatsächlichen Ansteckungsfälle. 90 bis 95 % der HAV-Infektionen verlaufen untypisch oder ohne ausgeprägtes krankheitsbild und werden deshalb nicht durch die amtliche Statistik erfaßt. Damit liegt die Infektionsrate von HAV deutlich über einer so bedeutenden Erkrankung wie z.B. der HIV-Infektion (weniger als 2000 Neuinfektionen pro Jahr). In medizinischen Bereichen wie der Pädiatrie, der Neonatologie oder der Infektionsmedizin, ebenso im Bereich lebensmittelverarbeitender Betriebe besteht dringender Bedarf für ein Händedesinfektionsmittel mit spezieller Wirksamkeit gegen HAV. Eine Grundwirksamkeit gegenüber behüllten Viren (z.B. HIV, HBV) sowie gegenüber Bakterien und Pilzen ist darüber hinaus eine selbstverständliche Grundforderung an solche Mittel, die aber in der Kombination mit einer HAV-Wirksamkeit bisher nirgendwo belegt wurde.

Bisher ist bekannt, daß einzelne Händedesinfektionsmittel mit einer Ethanolkonzentration von 80 bis 90 Vol% eine Wirksamkeit gegenüber Poliovirus besitzen können. Zwar handelt es sich beim Poliovirus ebenfalls um ein unbehülltes Partikel, die Empfindlichkeit des Poliovirus gegenüber derartigen Desinfektionsmittelrezepturen wird in Fachkreisen jedoch als Ausnahme angesehen.

Deshalb wird zur Prüfung der Viruzidie von Händedesinfektionsmitteln standardmäßig gefordert, daß gegen das unbehüllte Simianvirus 40 geprüft werden. Hier erwiesen sich alle Händedesinfektionsmittel auf Alkoholbasis als wirkungslos.

Trotzdem gibt es im Markt Hersteller von Händedesinfektionsmitteln, die aufgrund der Wirksamkeit gegenüber Poliovirus eine viruzide Wirkung gegenüber Hepatitis A ausloben. Dieser Rückschluß ist nicht korrekt, da, wie oben erläutert, nicht von einem Virus, das bekanntermaßen empfindlich gegenüber Desinfektionsmitteln ist, auf ein anderes Virus, egal welches, geschlossen werden kann. Deshalb galt bis heute, trotz dieser im Markt befindlichen Produkte, für die Fachwelt, daß Produkte auf Alkoholbasis keine Wirksamkeit gegenüber Hepatitis A besitzen, da bisher niemals ein Nachweis für eine solche Wirksamkeit geführt wurde.

Wallhäußer beschäftigt sich in seinem Buch "Praxis der Sterilisation, Desinfektion, Konservierung", 5. Auflage, Seite 94 - 95, Georg Thieme Verlag Stuttgart/New York, 1995, unter anderem mit der Desinfektion beim Umgang bei Hepatitis Viren. Wallhäußer bezieht sich dort auf die 11. Ausgabe der vom Bundesgesundheitsamt Deutschland nach § 10c BSG geforderten Listung experimentell geprüfter und anerkannt wirksamer Desinfektionsmittel und -verfahren und stellt klar, daß lediglich Chloramin-T in 1-prozentiger und 2-prozentiger Konzentration den Anforderungen an die Wirksamkeit gegen Hepatitis A genügt. Weiterhin sind als wirksam geltende Präparate zwei Handelspräparate aufgeführt, die ebenfalls auf Chlorwirkstoffen basieren.

Demzufolge hat sich die Fachwelt, obwohl Chlorwirkstoffe aus ökologischen sowie toxikologischen Gründen bedenklich sind, damit abgefunden, daß es erforderlich ist, chlorhaltige Mittel für die Bekämpfung von Hepatitis A einzusetzen. Mittel auf Alkoholbasis galten ausnahmslos als unwirksam gegenüber Hepatitis A-Viren und wurden auch in älteren Ausgaben der BGA-Liste als solche eingestuft. Obwohl der Bedarf für Mittel, die ohne Zuhilfenahme oder nur mit sehr stark reduzierten Mengen von chlorhaltigen Wirkstoffen eine erwiesenermaßen ausreichende Wirksamkeit gegenüber Hepatitis A besitzen, im Markt sehr groß wäre, konnte nicht erwartet werden, daß derartige Mittel verfügbar gemacht werden können.

Aufgabe der vorliegenden Erfindung war es deshalb, Mittel zu suchen, die mit ohne Zusatz chloraktiver Wirkstoffe ausreichende Wirkung gegenüber Hepatitis A-Viren entfalten.

Gegenstand der vorliegenden Erfindung ist dementsprechend die Verwendung eines Mittels, das einen oder mehrere wäßrige Alkohole und gewünschtenfalls 0,1 bis 10 Gew.% zusätzliche antimikrobielle Komponenten enthält, mit der Maßgabe, daß keine chlorhaltigen und/oder chlorabspaltenden Wirkstoffe, enthalten sind, wobei das erfindungsgemäß zu verwendende Mittel als Alkohol 50 bis 97 Gew. %, besonders bevorzugt 80 bis 95 Gew. % Ethanol bezogen auf das gesamte Mittel enthält, wobei der Restauf 100% Gesamtmenge, Wasser und/oder andere Wirkstoffe sind, zur Abtötung von Hepatitis A-Viren.

Für die Experten galt nach wie vor, daß explizit für Hepatitis A keine Wirksamkeit solcher Mittel vorliegt. Deshalb war es trotz der erwähnten Produkte mit HAV-Auslobung, aufgrund des Kenntnisstands der Fachwelt, nicht naheliegend sondern überraschend, daß HAV-Wirksamkeit für erfindungsgemäße Mittel nachgewiesen werden konnte.

Als weitere Zusatzstoffe können in bevorzugten Ausführungsformen beispielhaft übliche Riechstoffe, Rückfetter, tensidische Komponenten enthalten sein.

In einer weiteren bevorzugten Ausführungsform enthält des erfindungsgemäß zu verwendende Mittel als weiteren Alkohol neben Ethanol 0,1 bis 40 Gew.% einer oder mehrerer Komponenten ausgewählt aus Methanol, n-Propanol, i-Propanol, 1,3-Butandiol, Phenoxyethanol, 1,2-Propylenglykol, Glycerin, wobei die Anteile der Alkohole und der übrigen Komponenten so zu wählen sind, daß die Summe von 100% nicht überschritten wird.

Vorzugsweise erreicht man mit dem erfindungsgemäß zu verwendenden Mittel, daß Hepatitis A bei Raumtemperatur innerhalb von weniger als 300 Sekunden, besonders bevorzugt innerhalb von weniger als 120 Sekunden, und ganz besonders bevorzugt innerhalb von weniger als 60 Sekunden inaktiviert wird.

In einer ebenfalls bevorzugten Ausführungsförm des erfindungsgemäß zu verwendenden Mittels, kann man auch bei sehr niedriger Temperaturen von ca. 0°C noch ausreichende Effekte gegen HAV bewirken.

Das erfindungsgemäß zu verwendende Mittel enthält vorzugsweise, bezogen auf das gesamte Mittel, als zusätzliche antimikrobielle Wirkstoffe Komponenten, die besonders bevorzugt ausgewählt sind aus den Gruppen der Aldehyde, antimikrobiellen, Säuren, Lewis-Säuren, Carbonsäureester, Säureamide, Phenole, Phenolderivate, Diphenyle, Diphenylalkane, Harnstoffderivate, Sauerstoff-, Stickstoff-Acetale sowie - Formale, Benzamidine, Isothrazoline, Phthalimidderivate, Pyridinderivate, antimikrobiellen oberflächenaktiven Verbindungen, Guanidine, antimikrobiellen amphoteren Verbindungen, Chinoline, wobei ganz besonders bevorzugt die zusätzliche chlorfreie antimikrobielle Komponente ausgewählt ist aus Undecylensäure, Zitronensäure, p-Hydroxyl-benzoesäure, Sorbinsäure, Salicylsäure, quaternären Ammoniumverbindungen, Guanidinen, Amphoteren.

Insbesondere ist durch Zusatz von Lewis-Säuren, beispielsweise Zinkchlorid, Aluminiumchlorid, Bariumchlorid, zu den erfindungsgemäß zu verwendenden Mitteln erreichbar, daß man mit reduzierten Mengen an Ethanol auskommt.

In einer bevorzugten Ausführung liegt das erfindungsgemäß zu verwendende Mittel als Flüssigkeit, Gel, Creme, Paste oder Schaum vor, gegebenenfall kann es auch in Form einer Kombination mit einem festen Träger vorliegen, die beispielsweise durch Tränken oder andere Behandlung von Papier, Stoff-Tüchern oder weiteren geeigneten Trägern zur Verfügung gestellt werden kann.

Das erfindungsgemäß zu verwendende Mittel enthält vorzugsweise zusätzliche oberflächenaktive Komponenten wie Alkylpolyglykoside.

Bevorzugte zusätzliche Hilfsmittel in dem erfindungsgemäß zu verwendenden Mittel sind Komponenten, die zur Verbesserung der Hautverträglichkeit führen, wie Rizinusöl, Glycerin oder andere Alkohole, die jedoch in den bisherigen Ausführungen bereits enthalten waren.

Vorzugsweise wird das erfindungsgemäß zu verwendende Mittel zur desinfizierenden Behandlung von Hautoberflächen, insbesondere in mikrobiologisch sensitivem Arbeitsumfeld, ganz besonders im Hospital-, Küchen-, Lebensmittel-, Kosmetik-, Pharmazie-, Haushalts-Sektor und ganz speziell, wenn Anforderungen an aseptisches Arbeiten gestellt werden, eingesetzt.

### Beispiele

Zur Überprüfung der Wirksamkeit gegenüber Hepatitis A wurde die folgende Rezeptur ausgewählt:

### Rezeptur A:

80 Gew.% Ethanol
15 Gew.% Methanol
Rest auf 100%;
zusätzliche chlorfreie Hilfsstoffe, wie Rückfetter, Parfüm etc., und Wasser

Die Suspensionsversuche zur Prüfung der Wirksamkeit gegen Hepatitis A wurden gemäß den Richtlinien des BGA (Bundesgesundheitsamtes) und der DVV (Deutsche Veterinär-Vorschriften) durchgeführt.

Die Rezepturen A wurde gemäß der Testvorschrift 80%ig konzentriert ohne und mit Eiweißbelastung mit dem Hepatitis A Virus bei Raumtemperatur inkubiert.
Nach vorgegebener Einwirkzeit wurde die Virus-Desinfektionsmittelsuspension auf eine entsprechend der genannten Versuchsvorschriften vorbereitete Mikrotiterplatte übertragen und im Anschluß in log 10-Schritten verdünnt.
Die Verdünnungen wurden auf Zellkulturplatten übertragen.

Die Toxizitätkontrollen wurden ebenfalls gemäß der Richtlinien des BGA und der DVV durchgeführt. Sowohl bei Rezeptur A als auch bei Rezeptur B trat bei einer Verdünnung von 10⁻³ keine Zellschädigung mehr auf.

Das Ergebnis der Inaktivierungsversuche läßt sich wie folgt zusammenfassen: Rezeptur A inaktiviert das Hepatitis A-Virus sowohl ohne als auch mit Eiweißbelastung um mehr als 5 Titerstufen (Log 10) bei einer Einwirkungszeit von mindestens 1 Minute.

Nach 5-minütiger Einwirkungszeit ist keine Restinfektiosität mehr nachweisbar.

Damit ist erstmals bewiesen, daß erfindungsgemäße Mittel Wirksamkeit gegen Hepatitis A besitzen.

## Patentansprüche

1. Verwendung eines Mittels auf Basis eines oder mehrerer wäßriger Alkohole, welches 50 bis 97 Gew.-% Ethanol, bezogen auf das gesamte Mitel, und als Rest auf 100 % Gesamtmenge Wasser und gegebenenfalls Hilfsstoffe, ausgewählt aus Riechstoffen, Rückfettern und tensidischen Komponenten, enthält, wobei das Mittel frei ist von chlorhaltigen und/oder chlorabspaltenden Wirkstoffen zur Abtötung von Hepatitis A-Viren.

2. Verwendung nach Anspruch 1, **dadurch gekennzeichnet, daß**, bezogen auf das gesamte Mittel, als weiterer Alkohol neben Ethanol 0,1 bis 40 Gew.% einer oder mehrerer Komponenten ausgewählt aus Methanol, n-Propanol, i-Propanol, 1,3-Butandiol, Phonoxyethanol, 1,2-Propylenglykol, Glycerin enthalten sind, wobei die Anteile der Alkohole so zu wählen sind, daß die Summe von 100% nicht überschritten wird.

3. Verwendung nach Anspruch 1 oder 2, **dadurch gekennzeichnet, daß** das Mittel als Flüssigkeit, Gel, Creme, Paste oder Schaum in Kombination mit einem festen Träger vorliegt.

4. Verwendung eines Mittels gemäß den Ansprüchen 1 bis 3 zur desinfizierenden Behandlung von Hautoberflächen.

## Claims

1. The use of a composition based on one or more aqueous alcohols which contains 50 to 97% by weight of ethanol, based on the composition as a whole, and - as the balance to 100% of the total quantity - water and optionally auxiliaries selected from perfumes, lipid layer enhancers and surfactant components, the composition being free from chlorine-containing and/or chlorine-releasing active ingredients, for destroying hepatitis A viruses.

2. The use claimed in claim 1, **characterized in that**, besides ethanol, 0.1 to 40% by weight, based on the composition as a whole, of one or more components selected from methanol, n-propanol, i-propanol, butane-1,3-diol, phenoxyethanol, 1,2-propylene glycol, glycerol are present as additional alcohol(s), the percentage contents of the alcohols having to be selected so that the sum of 100% is not exceeded.

3. The use claimed in claim 1 or 2, **characterized in that** the composition is formulated as a liquid, gel, cream, paste or foam in combination with a solid carrier.

4. The use of the composition claimed in claims 1 to 3 for the disinfecting treatment of skin surfaces.

## Revendications

1. Utilisation, pour la destruction des virus de l'hépatite A, d'un produit à base d'un ou de plusieurs alcools aqueux, qui contient 50 à 97 % en poids d'éthanol, par rapport à la totalité du produit, et comme reste pour obtenir une quantité totale de 100 %, de l'eau et, le cas échéant, des adjuvants, sélectionnés parmi les parfums, les agents regraissants et les composants tensioactifs, le produit étant exempt de substances actives contenant du chlore et/ou de substances actives dégageant du chlore.

2. Utilisation selon la revendication 1, **caractérisée en ce que** sont contenus, par rapport à la totalité du produit, comme autre alcool, outre l'éthanol, 0,1 à 40 % en poids d'un ou de plusieurs composants sélectionnés parmi les composés suivants: méthanol, n-propanol, i-propanol, 1,3-butanediol, phénoxyéthanol, 1,2-propylèneglycol et glycérine, les concentrations des alcools devant être sélectionnées de manière à ne pas dépasser la somme de 100 %.

3. Utilisation selon la revendication 1 ou 2, **caractérisée en ce que** le produit se présente sous la forme de liquide, de gel, de crème, de pâte ou de mousse en association avec un support solide.

4. Utilisation d'un produit selon les revendications 1 à 3 pour le traitement désinfectant des surfaces de peau.
